## Europäisches Patentamt
## European Patent Office
## Office européen des brevets

(19)

(11) Veröffentlichungsnummer: **0 147 781**
**B1**

(12)

# EUROPÄISCHE PATENTSCHRIFT

(45) Veröffentlichungstag der Patentschrift:
24.08.88

(51) Int. Cl.⁴: **C 10 B 39/02,** F 22 B 1/04

(21) Anmeldenummer: **84115787.8**

(22) Anmeldetag: **19.12.84**

(54) **Verfahren zur Erzeugung eines überhitzten Hochdruckdampfes bei der Kokstrockenkühlung und geeignete Vorrichtungen dazu.**

(30) Priorität: **23.12.83 DE 3346618**

(43) Veröffentlichungstag der Anmeldung:
**10.07.85 Patentblatt 85/28**

(45) Bekanntmachung des Hinweises auf die Patenterteilung:
**24.08.88 Patentblatt 88/34**

(84) Benannte Vertragsstaaten:
**AT BE FR IT NL**

(56) Entgegenhaltungen:
**EP - A - 0 140 054**
**DE - A - 3 007 040**

(73) Patentinhaber: **Still Otto GmbH,
Christstrasse 9 Postfach 10 18 50,
D-4630 Bochum 1 (DE)**

(72) Erfinder: **Lorenz, Kurt, Dr., Habichtstrasse 65,
D-4321 Hattingen (DE)**
Erfinder: **Dungs, Horst, Am Düngelbruch 21,
D-4690 Herne (DE)**
Erfinder: **Nashan, Gerd, Dr.-Ing., Hirschkampstrasse 24,
D-4200 Oberhausen (DE)**
Erfinder: **Breidenbach, Dieter, Dr.-Ing., Meisenweg 20,
D-4355 Waltrop (DE)**
Erfinder: **Volmari, Josef, Ing.-grad., Heidelbeerweg 16,
D-4630 Bochum (DE)**

(74) Vertreter: **Dahlkamp, Heinrich-Leo, Dipl.-Ing., Still Otto
GmbH Patentabteilung Christstrasse 9,
D-4630 Bochum 1 (DE)**

**Beschreibung**

Die Erfindung bezieht sich auf ein Verfahren gemäss Kennzeichen des Hauptanspruches und auf Vorrichtungen zur Durchführung dieses Verfahrens.

Aus der DE-A-3 332 702 ist ein Verfahren zur Trockenkühlung von glühendem Koks sowie eine geeignete Kokstrockenkühleinrichtung bekannt, wobei ein Teil der Wärme des heissen Kokses in der Kühlkammer an ein im Kreislauf geführtes Kreislaufgas übertragen wird und in einem nachgeschalteten Abhitzekessel ein Wärmetauscher zur Erzeugung von überhitztem Hochdruckdampf verwendet wird. Bei diesem bekannten Verfahren sind die üblichen Überhitzer, Verdampfer und Speisewasservorwärmer im Abhitzekessel angeordnet und verfahrensmässig hintereinander geschaltet. Es hat sich hierbei gezeigt, dass die Rohre im Überhitzer den extremsten Bedingungen ausgesetzt sind. Sie werden einerseits von den über 1000 °C heissen Kreislaufgasen umströmt und werden andererseits innen von überhitztem Hochdruckdampf durchströmt. In der reduzierenden Atmosphäre des heissen Kreislaufgases müssen dazu sehr teure Materialien verwendet werden, die diesen extremen Temperaturen, den hohen Drücken sowie einer sehr korrosiven Atmosphäre standhalten müssen.

Aus der DE-A-3 007 040 ist auch ein Verfahren bzw. Vorrichtung zur Ausnutzung der fühlbaren Kokswärme bei der trockenen Kokskühlung durch ein inertes Kreislaufgas bekannt, bei dem das heisse Kreislaufgas aus der Kühlkammer vor dem Dampfkessel-Wärmetauscher-System durch eine Brennkammer geführt wird, in welche Brenngas und ein Sauerstoff enthaltendes Gas, z.B. Verbrennungsluft, einführbar ist. Diese zusätzliche Brennkammer soll dazu dienen, bei Unregelmässigkeiten in der Zufuhr des heissen Kokses eine kontinuierliche Dampferzeugung sicherzustellen. Auch hierbei wird beim normalen Betrieb der Anlage das gesamte heisse Kreislaufgas oben in das Dampfkessel-Wärmetauscher-System geleitet, wobei die Gase als erstes auf die Rohrschlangen für die Dampfüberhitzung geleitet werden.

Aufgabe der Erfindung ist es nun, ein Verfahren und geeignete Vorrichtungen vorzuschlagen, bei dem die Überhitzerrohre weniger stark beansprucht werden und somit aus preisgünstigeren Materialien bestehen können und den Betrieb der Anlage sicherer machen.

Die Aufgabe wird erfindungsgemäss durch das Kennzeichen des Hauptanspruches sowie des Vorrichtungsanspruches 5 gelöst.

Die Massnahmen der Ansprüche 2 bis 4 sind zweckmässige zusätzliche Verfahrensschritte.

Durch die Herausnahme der Überhitzung des Dampfes aus dem normalen Strom des heissen Kühlgases ist es möglich, die Überhitzerrohre immer in einer oxidierenden Atmosphäre zu halten und somit sehr viel preisgünstigere Materialien für die Überhitzerrohre zu verwenden. Es hat sich gezeigt, dass zur Überhitzung des Dampfes nur ein kleiner Teil der gesamten im heissen Kühlgas enthaltenen Wärme benötigt wird. Diese erforderliche Wärme zur Überhitzung des Dampfes lässt sich erfindungsgemäss auf einfache Weise in einer separaten Brennkammer durchführen, wobei die Brennkammer mit einem preiswert auf der Kokerei zur Verfügung stehenden Fremdgas betrieben werden kann. Zur Ausnutzung der Wärme der heissen Abgase aus dem Überhitzer sieht die Erfindung gleichzeitig vor, dass diese direkt in den heissen Teil des Abhitzekessels gegeben werden.

Da auch in dem heissen Kühlgas erhebliche Mengen brennbaren Gases enthalten sein können, hat es sich erfindungsgemäss als günstig erwiesen, die Brennkammer der Überhitzers ganz oder teilweise mit einem Teilstrom des Kreislaufkühlgases der Kokstrockenkühlung zu betreiben. Durch die gleichzeitige Einleitung von Sauerstoff enthaltenden Gasen, wie z.B. Verbrennungsluft, werden die restlichen brennbaren Gase im Kreislaufgas ebenfalls verbrannt.

Neben der Möglichkeit einen heissen Teilstrom des Kreislaufkühlgases nach Verlassen der Kühlkammer in die Brennkammer zu leiten, kann erfindungsgemäss auch das Kreislaufkühlgas für die Brennkammer des Überhitzers nach der Abkühlung im Abhitzekessel bzw. nach dem Umwälzgebläse entnommen werden. Dadurch wird ein vorverdichtetes, von Feststoffen freies Gas benutzt, welches ohne weiteres in die Brennkammer geleitet werden kann. Durch eine geeignete Zufuhr von Verbrennungsluft und eventuell zusätzlichen Brenngasen ist es möglich, eine definierte Temperatur der Gase zu erreichen, die durch den Überhitzer geleitet werden. Eine eventuell nicht gewollte zu grosse Überhitzung des Dampfes kann damit ebenfalls vermieden werden. Es wird somit in jedem Fall eine zu starke Beanspruchung der Überhitzerrohre unterbunden.

Durch die erfindungsgemässen Massnahmen ist es insbesondere möglich, den Dampf im Überhitzer auf eine Temperatur von 280 bis 600 °C zu überhitzen, wodurch ein sehr vielseitig verwendbarer und hochwertiger überhitzter Dampf erzeugt wird.

Zur Durchführung des erfindungsgemässen Verfahrens wird vorgeschlagen, dass die Brennkammer mit dem Überhitzer oberhalb des Abhitzekessels angeordnet ist und Auslass-seitig direkt mit dem Eintritt in den Abhitzekessel oder mit der oberen Verbindungsleitung zwischen Kühlkammer und Abhitzekessel in Verbindung steht.

Die Überhitzerrohre sind aus dem eigentlichen Strom des heissen Kühlgases entfernt worden und werden nur von den heissen Abgasen aus der Brennkammer beaufschlagt. Durch die direkte Anordnung der Brennkammer mit dem sich anschliessenden Überhitzer oberhalb des Abhitzekessels wird eine einfache und kompakte Bauweise der gesamten Anlage erreicht, ohne dass grössere Veränderungen am Abhitzekessel mit den Dampfleitungen und der Dampftrommel vorgenommen werden müssen.

Die Erfindung wird anhand der beigefügten als Schemaskizze ausgeführten Figur beispielsweise näher erläutert.

In an sich bekannter Weise wird der heisse, glühende Koks aus der Kokskammer mit einem Kübel zur Kühleinrichtung gebracht und dort über den Kokseintritt 3 in die Vorkammer 1 gefüllt. Aus der Vorkammer 1 tritt der heisse Koks durch die Durchtrittsöffnung 4 in die eigentliche Kühlkammer 2 ein, in der er seine Wärme teils an die inneren und äusseren Kühlwände 6 und 7, teils an ein im Kreislauf geführtes Kühlgas abgibt. Die inneren Kühlwände 7 sind auf unteren Stützen 8 gelagert, die wiederum sich teilweise auf dem Kühlgaszuführungskanal 9 abstützen. Der gekühlte Koks wird am unteren Ende der Kühlkammer 2 über die Koksaustragwippen 10 und den Koksaustritt 11 abgezogen. Das heisse Kühlgas wird am oberen Ende der Kühlkammer 2 über die Verbindungsleitung 13 zum Abhitzekessel 12 mit den äusseren Kühlwänden 12a geführt. In dem Abhitzekessel befinden sich die Verdampferrohrbündel 14 und 15 sowie der Speisewasservorwärmer 16. Unter dem Abhitzekessel 12 befindet sich der Feinstaubabzug 17. Nach Verlassen des Abhitzekessels werden die Kühlgase durch den Feinentstauber 18 geleitet und über die Leitungen 19, das Gebläse 20 und die Kühlgaszuführungsleitung 21 zum unteren Ende der Kühlkammer zurückgeführt. Aus der Kühlgaszuführungsleitung 21 kann zwischen dem Gebläse 20 und der Kühlkammer 2 ein Teilstrom des gekühlten Kühlgases entnommen werden und über die Leitung 22 der Brennkammer 23 vor dem Überhitzer 26 zugeführt werden. Der Brennkammer 23 werden die Verbrennungsmedien Luft und Fremdgas über die Leitungen 24, 25 zugeführt. Die heissen Verbrennungsabgase aus der Brennkammer werden direkt durch den Überhitzer 26 geleitet und gelangen von dort zum Kopf des Abhitzekessels. Austritt des Überhitzers und Abhitzekessel sind über eine Regelklappe und einen Absperrschieber 29 miteinander verbunden. Bei Drosselung bzw. vollständiger Absperrung der Durchtrittsöffnung werden die Abgase ganz oder teilweise über die Leitung 32 ins Freie abgezogen. Die Brennkammer-Überhitzereinheit stützt sich über Träger 30 direkt auf dem Abhitzekessel ab.

Der im Abhitzekessel 12, 12a und in den Kühlwänden 6, 7 in der Kühlkammer erzeugte hochgespannte Sattdampf gelangt in die Dampftrommel 27 und wird von dort direkt zum Überhitzer 26 zur Überhitzung geleitet und steht bei Leitung 28 als hochgespannter, überhitzter Dampf zur Weiterverwendung zur Verfügung.

| | |
|---|---|
| 1 | Vorkammer |
| 2 | Kühlkammer |
| 3 | Kokseintritt für 1 |
| 4 | Koksdurchtrittsöffnung von 1 nach 2 |
| 5 | Gasabzugstutzen |
| 6 | äussere Kühlwände von 2 |
| 7 | innere Kühlwände von 2 |
| 8 | untere Stützen von 7 |
| 9 | Kühlgaszuführungskanal |
| 10 | Koksaustragswippen |
| 11 | Koksaustritt |
| 12 | Abhitzekessel |
| 12a | äussere Kühlwände von 12 |
| 13 | Verbindungsleitung von 2 nach 12 |
| 14 | Verdampferrohrbündel |
| 15 | Verdampferrohrbündel |
| 16 | Speisewasservorwärmer |
| 17 | Feinstaubabzug |
| 18 | Feinentstauber |
| 19 | Kühlgasleitung von 18 nach 20 |
| 20 | Gebläse |
| 21 | Kühlgaszuführungsleitung zu 2 |
| 22 | Kühlgaszuführungsleitung zu 23 |
| 23 | Brennkammer |
| 24 | Luftzufuhr |
| 25 | Fremdgaszufuhr |
| 26 | Überhitzerrohre |
| 27 | Dampftrommel |
| 28 | Dampfleitung für überhitzten Dampf |
| 29 | Regelklappe verbunden mit einem Absperrschieber |
| 30 | Abstützung des Überhitzers |
| 31 | Regelklappe und Absperrschieber |
| 32 | Rauchgasabzug |

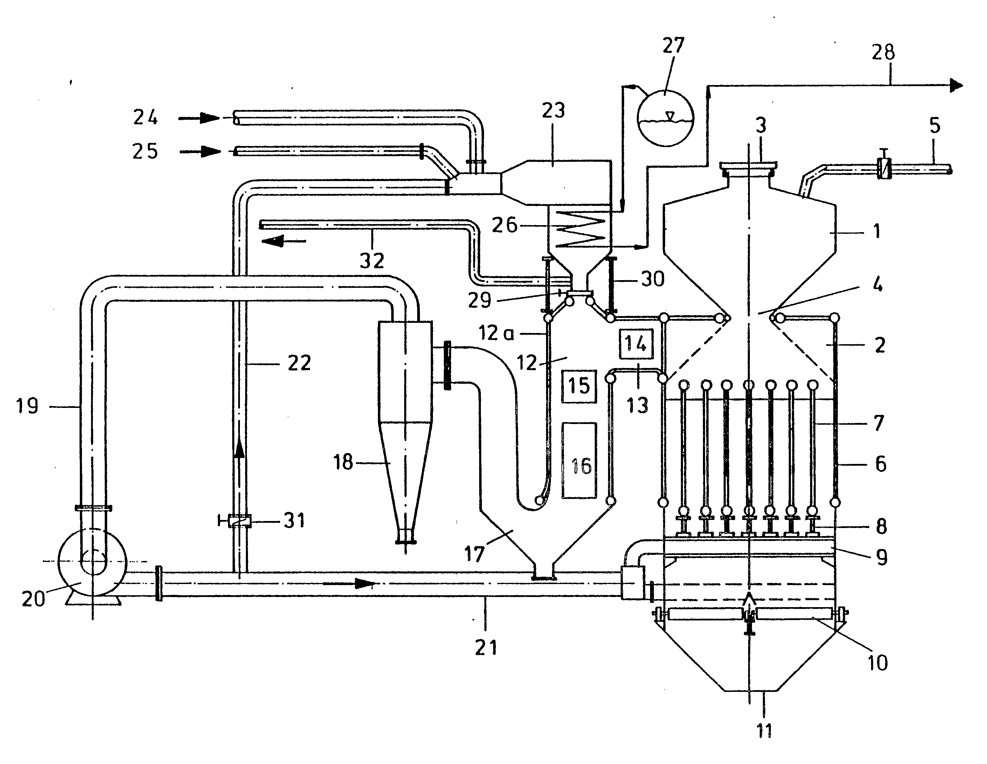

**Patentansprüche**

1. Verfahren zur Erzeugung eines überhitzten Hochdruckdampfes bei der Kokstrockenkühlung, wobei ein Kreislaufkühlgas nacheinander eine mit heissem Koks füllbare Kühlkammer und einen Wärmetauscher durchströmt, dadurch gekennzeichnet, dass die Überhitzung des erzeugten Dampfes ausserhalb des normalen Kühlgaskreislaufes in oxidierender Atmosphäre im Zusammenhang mit einer separaten Brennkammer erfolgt und die heissen Abgase anschliessend in den heissen Teil des Abhitzekessels gegeben werden.

2. Verfahren nach Anspruch 1, dadurch gekennzeichnet, dass die Brennkammer des Überhitzers ganz oder teilweise mit einem Teilstrom des Kreislaufkühlgases der Kokstrockenkühlung betrieben wird.

3. Verfahren nach Anspruch 2, dadurch gekennzeichnet, dass das Kreislaufkühlgas für die Brennkammer des Überhitzers nach der Abkühlung im Abhitzekessel bzw. nach dem Umwälzgebläse entnommen wird.

4. Verfahren nach Anspruch 1, dadurch gekennzeichnet, dass der Dampf im Überhitzer auf eine Temperatur von 280 bis 600 °C überhitzt wird.

5. Vorrichtung zur Durchführung des Verfahrens nach den Ansprüchen 1 bis 4, dadurch gekennzeichnet, dass die Brennkammer mit dem sich anschliessenden Überhitzer oberhalb des Abhitzekessels angeordnet ist und Auslass-seitig direkt mit dem Eintritt des Abhitzekessels oder mit der oberen Verbindungsleitung zwischen Kühlkammer und Abhitzekessel in Verbindung steht.

**Claims**

1. Process for the preparation of superheated high-pressure steam by the dry cooling of coke, according to which a circulating cooling gas consecutively flows through a cooling chamber chargeable with hot coke and through a heat exchanger, characterized in that the superheating of generated steam takes place outside the normal cooling gas circulation in oxidizing atmosphere in conjunction with a separate burning chamber, and in that the hot effluent gases are fed subsequently into the hot section of the waste heat boiler.

2. Process as claimed in Claim 1, characterized in that the burning chamber of the superheater is entirely or partially operated on a partial stream of the circulating cooling gas from coke dry cooling.

3. Process as claimed in Claim 2, characterized in that the circulating cooling gas for the burning chamber of the superheater is tapped downstream to the cooling stage in the waste heat boiler and/or downstream to the recirculating blower.

4. Process as claimed in Claim 1, characterized in that the steam is superheated in the superheater to a temperature of 280 to 600 °C.

5. Apparatus for carying out said process in conformity with any one of Claims 1 to 4 inclusive, characterized in that the burning chamber together with the downstream connected superheater is located above the waste heat boiler and is in direct connection at its outlet side with the intake of the waste heat boiler or with the upper connecting mains stretching between cooling chamber and waste heat boiler.

**Revendications**

1. Procédé de fabrication de vapeur surchauffée à haute pression lors du refroidissement à sec du coke, qui prévoit que le gaz de refroidissement du circuit passe d'abord à travers une chambre de refroidissement qui peut être remplie avec du coke chaud, et ensuite à travers un échangeur de chaleur. Le procédé est caractérisé par le fait, que la surchauffe de la vapeur produite se déroule à l'extérieur du circuit normal du gaz de refroidissement, dans une atmosphère oxydante, en connexion avec une chambre de combustion à part et que la chaleur perdue est successivement versée dans la partie chaude de la chaudière de récupération.

2. Procédé selon revendication 1, caractérisé par le fait que la chambre de combustion du surchauffeur est actionnée complètement ou en partie par un courant partiel du gaz de refroidissement du circuit pour l'extinction à sec du coke.

3. Procédé selon revendication 2, caractérisé par le fait, que le gaz de refroidissement du circuit pour la chambre de combustion du surchauffeur sera prélevé après le refroidissement dans la chaudière de récupération ou bien après la soufflante de circulation.

4. Procédé selon revendication 1, caractérisé par le fait, que la vapeur sera surchauffée dans le surchauffeur à une température de 280 à 600 °C.

5. Dispositif pour la mise en œuvre du procédé selon les revendications 1 à 4, caractérisé par le fait que la chambre de combustion avec le surchauffeur installé en aval est disposée au-dessus de la chaudière de récupération et que, du côté de la sortie, elle est directement raccordée à l'entrée de la chaudière de récupération ou bien à la tuyauterie de connexion supérieure se trouvant entre la chambre de refroidissement et la chaudière de récupération.